# EUROPÄISCHE PATENTANMELDUNG

(11) **EP 4 841 212 A1**
(43) Veröffentlichungstag der Anmeldung: **18.11.2026**
(21) Anmeldenummer: 26175923.7
(22) Anmeldetag: 30.04.2026
(51) Int. Cl.: G01B 15/02, G01S 13/02

(54) **VERFAHREN UND VORRICHTUNG ZUR BESTIMMUNG VON MATERIALPARAMETERN**

(30) Priorität: 14.05.2025 DE 102025118510
(71) Anmelder: TRILITEC GmbH, 28359 Bremen (DE)
(72) Erfinder: Littau, Benjamin, 28876 Oyten (DE)
(74) Vertreter: Aulich, Martin

(57) **Zusammenfassung**

Die Erfindung betrifft ein Verfahren zur insbesondere automatischen Bestimmung mindestens eines Materialparameters, bevorzugt mindestens zwei Materialparametern, insbesondere der Dicke und/oder der Dichte und/oder des Brechungsindex oder eines anderen Materialparameters, eines bevorzugt länglichen Messgegenstands (11), bei dem, vorzugsweise innerhalb eines übergeordneten Produktionsprozesses, in dem der Messgegenstand (11) hergestellt oder verwendet wird, mittels eines Radarsenders Radarwellen auf den zwischen einer Referenzfläche (13) und dem Radarsender angeordneten Messgegenstand (11) gerichtet werden, die den Messgegenstand (11) durchtreten und danach auf die Referenzfläche (13) treffen, bei dem mittels der Radarwellen die optische Weglänge OWL zwischen Radarsender und Referenzfläche (13) gemessen wird, und bei dem, insbesondere mittels einer Auswerteeinrichtung, der zu bestimmende Materialparameter des Messgegenstands (11) auf Basis der gemessenen optischen Wegelänge OWL ermittelt wird, des Abstands a zwischen dem Radarsender und einer dem Radarsender zugewandten Grenzfläche des Messgegenstands (11), auf die die Radarwellen bei Eintritt in den Messgegenstand (11) treffen, des Abstands b zwischen einer der Referenzfläche (13) zugewandten Grenzfläche des Messgegenstands (11), aus der die Radarwellen nach Durchtritt durch diesen austreten, und der Referenzfläche (13), und des Abstands RD zwischen dem Radarsender und der Referenzfläche (13).

## Beschreibung

Die vorliegende Erfindung betrifft ein Verfahren und eine Vorrichtung zur insbesondere automatischen Bestimmung mindestens eines Materialparameters, bevorzugt von mindestens zwei Materialparametern, eines bevorzugt länglichen Messgegenstands, insbesondere der Dicke und/oder der Dichte und/oder des Brechungsindex und/oder eines anderen Materialparameters.

In der Qualitätssicherung bei der Herstellung von Produkten, Vorprodukten etc. sind im Stand der Technik häufig eine Stichprobenentnahme des jeweiligen im Rahmen der Produktion verwendeten oder hergestellten Messgegenstands und eine Laborprüfung erforderlich, um Materialparameter des Messgegenstands zu bestimmen. Ein solcher Messgegenstand kann beispielsweise eine produzierte oder noch in der Produktion befindliche Dämmstoffbahn sein. Bei solchen Dämmstoffbahnen wird beispielsweise auf diese Weise stichprobenartig überprüft, ob die Dicke der gerade hergestellten Dämmstoffbahnen vorgegebenen Sollwerten entspricht. Dieser Ansatz ist jedoch zeit- und personalintensiv und anfällig für Prozessfehler.

Im Stand der Technik werden zur Messung von Materialdicken von Messgegenständen auch Lasersensoren eingesetzt. Diese sind allerdings beispielsweise für teiltransparente oder oberflächenraue Materialien, wie etwa Polymerschäume, ungeeignet.

Zur Bestimmung des Raumgewichts von Messgegenständen werden auch röntgenbasierte Systeme verwendet. Diese sind jedoch aufgrund der notwendigen Abschirmmaßnahmen für größere Messgegenstände unpraktisch und auch bei sehr geringem Raumgewicht ungeeignet, wie dies beispielsweise im Leichtbau vorkommt.

Ausgehend hiervon ist es Aufgabe der vorliegenden Erfindung, ein besonders verlässliches und bei Bedarf auch während eines laufenden Produktionsprozesses anwendbares Verfahren anzugeben zur insbesondere automatischen Bestimmung mindestens eines Materialparameters eines Messgegenstands. Es ist des Weiteren Aufgabe der Erfindung, eine hierfür geeignete Messvorrichtung anzugeben.

Diese Aufgabe wird gelöst durch ein Verfahren mit den Merkmalen des Anspruchs 1 und eine Messvorrichtung mit den Merkmalen des Anspruchs 12.

Das erfindungsgemäße Verfahren umfasst entsprechend, dass vorzugsweise innerhalb eines übergeordneten Produktionsprozesses, in dem der Messgegenstand hergestellt oder verwendet wird, mittels eines Radarsenders Radarwellen (bzw. elektromagnetische Wellen im Radarwellenlängenbereich) auf den zwischen einer Referenzfläche und dem Radarsender angeordneten Messgegenstand gerichtet werden, die den Messgegenstand durchtreten und danach auf die Referenzfläche treffen, wobei mittels der Radarwellen die optische Weglänge OWL zwischen Radarsender und Referenzfläche gemessen wird, und wobei, insbesondere mittels einer Auswerteeinrichtung, der zu bestimmende Materialparameter des Messgegenstands auf Basis der gemessenen optischen Wegelänge OWL ermittelt wird sowie auf Basis des Abstands a zwischen dem Radarsender und einer dem Radarsender zugewandten Grenzfläche des Messgegenstands, auf die die Radarwellen bei Eintritt in den Messgegenstand treffen, auf Basis des Abstands b zwischen einer der Referenzfläche zugewandten Grenzfläche des Messgegenstands, aus der die Radarwellen nach Durchtritt durch den Messgegenstand austreten, und der Referenzfläche, und auf Basis des (tatsächlichen) Abstands RD zwischen dem Radarsender und der Referenzfläche.

Es hat sich gezeigt, dass mit diesem Verfahren problemlos und verlässlich Materialparameter wie etwa die Dicke und/oder die Dichte und/oder der Brechungsindex eines Messgegenstands bestimmbar sind, und zwar bei Bedarf auch während des übergeordneten Produktionsprozesses. Bei dem Messgegenstand kann es sich vorzugsweise um einen Messgegenstand aus Leichtbaumaterialien (Dämmstoff oder Schaumstoff oder dergleichen) oder Holzwerkstoff handeln.

Bevorzugt kann vorgesehen sein, dass auch der Abstand a und/oder der Abstand b und/oder der Abstand RD durch Messung bestimmt wird, insbesondere durch eine Messung vor der Ermittlung des Materialparameters durch die Auswerteeinrichtung. Denkbar ist dabei allerdings, dass einer dieser Abstände den Wert Null aufweist und aus diesem Grund in der Praxis nicht explizit gemessen werden muss. Beispielsweise könnte der Abstand b den Wert Null aufweisen, wenn der Messgegenstand unmittelbar an der Referenzfläche anliegt.

Vorzugsweise kann weiter vorgesehen sein, dass der oder einer der Materialparameter, der im Rahmen des Verfahrens bestimmt wird, eine (geometrische) Abmessung D des Messgegenstands ist, insbesondere dessen Dicke, und/oder die Dichte des Messgegenstands und/oder der Brechungsindex ME des Messgegenstands, wobei im Rahmen der Bestimmung der Abmessung D und/oder der Dichte und/oder des Brechungsindex ME der Zusammenhang OWL = a + b + D * ME und/oder der Zusammenhang RD = a + b + D verwendet wird.

Weiter kann vorzugsweise vorgesehen sein, dass der Abstand a mittels von der dem Radarsender zugewandten Grenzfläche des Messgegenstands reflektierten elektromagnetischen Wellen, insbesondere Radarwellen oder Laserlicht, oder mittels Ultraschallwellen gemessen wird, die zuvor auf den Messgegenstand gerichtet wurden, und/oder dass der Abstand b mittels von der der Referenzfläche zugewandten Grenzfläche des Messgegenstands reflektierten elektromagnetischen Wellen, insbesondere Radarwellen oder Laserwellen, oder mittels Ultraschallwellen gemessen wird, die zuvor auf den Messgegenstand gerichtet wurden, und/oder dass der Abstand RD mittels elektromagnetischer Wellen, insbesondere Radarwellen oder Laserwellen, oder mittels Ultraschallwellen gemessen wird, die zuvor auf die Referenzfläche gerichtet wurden, insbesondere mittels solcher Wellen, die von der Referenzfläche reflektiert wurden.

Dabei kann zudem vorgesehen sein, dass die optische Weglänge OWL und/oder der Abstand a und/oder der Abstand b mittels der von dem Radarsender stammenden Radarwellen gemessen wird. Alternativ kann auch vorgesehen sein, dass die optische Weglänge OWL mittels der von dem Radarsender stammenden Radarwellen gemessen wird und der Abstand a und/oder der Abstand b und/oder der Abstand RD mittels Laserlicht eines oder mehrerer Lasersender oder mittels Radarwellen eines oder mehrerer weiterer Radarsender oder mittels Ultraschallwellen eines oder mehrerer Ultraschallsender.

Dabei kann der Lasersender oder der Ultraschallsender oder der weitere Radarsender, der das Laserlicht bzw. die Ultraschallwellen bzw. die Radarwellen zur Messung des Abstands a auf die dem Radarsender zugewandte Grenzfläche richtet, benachbart zu dem Radarsender auf derselben Seite des Messgegenstands angeordnet sein wie der Radarsender und/oder der Lasersender oder der Ultraschallsender oder der weitere Radarsender, der das Laserlicht bzw. die Ultraschallwellen bzw. die Radarwellen zur Messung des Abstands b auf die der Referenzfläche zugewandte Grenzfläche richtet, benachbart zu der Referenzfläche auf derselben Seite des Messgegenstands wie die Referenzfläche.

Die Radarwellen zur Messung des Abstands a und/oder b und/oder RD und/oder der optischen Weglänge OWL können vorzugsweise Radarwellen im Bereich zwischen 0,3 GHz und 1000 GHz sein.

Weiter kann vorgesehen sein, dass die Radarwellen zur Messung der optischen Weglänge OWL Radarwellen niedrigerer Frequenz sind, insbesondere im Bereich zwischen 1 GHz und 80 GHz, bevorzugt zwischen 1 und 67 GHz, und die Radarwellen zur Messung des Abstands a und/oder b und/oder RD Radarwellen höherer Frequenz, insbesondere im Bereich zwischen 40 GHz und 300 GHz, bevorzugt zwischen 50 GHz und 260 GHz.

Was den Abstand a und/oder b und/oder RD und/oder die optische Weglänge OWL betrifft, so kann dieser vorzugsweise mittels eines FMCW- oder mittels eines AMCW-Radarmessverfahrens gemessen werden.

Vorzugsweise kann weiter vorgesehen sein, dass im Rahmen der Messung des Abstands a und/oder b und/oder RD und/oder der optischen Weglänge OWL von dem Radarsender oder dem einen weiteren oder jedem weiteren Radarsender frequenz- oder amplitudenmodulierte Radarwellensignale erzeugt und nach Reflexikon durch die (jeweilige) Grenzfläche des Messgegenstands oder die Referenzfläche von einem Radarempfänger empfangen werden, und dass die Abstände a und/oder b und/oder RD und/oder die optische Weglänge OWL auf Basis der Frequenz- bzw. Amplitudenverschiebung zwischen den erzeugten und den empfangenen Signalen ermittelt werden.

Dabei kann der insbesondere gemeinsam mit dem Radarsender eine Radarsensoreinheit bildende Radarempfänger auf derselben Seite des Messgegenstands angeordnet sein wie der Radarsender oder der weitere Radarsender.

Gemäß einer weiteren, besonders bevorzugten Weiterbildung der Erfindung kann vorgesehen sein, dass zur Kompensation von Einflüssen der Messumgebung, insbesondere einer ungewollten, beispielsweise temperaturbedingten Positionsänderung des Radarsenders und/oder der Referenzfläche, der aktuelle Ist-Abstand RD während des Verfahrens (bzw. ggf. des Produktionsprozesses) mehrfach, insbesondere periodisch oder kontinuierlich, gemessen wird, und dass der jeweils gemessene Ist-Abstand RD im Rahmen der Ermittlung des oder jedes zu bestimmenden Materialparameters verwendet wird.

Allgemein gesprochen kann vorgesehen sein, dass der Abstand a und/oder b und/oder RD und/oder die optische Weglänge OWL mehrfach, insbesondere periodisch, gemessen wird, und dass mit den gemessenen Werten im Rahmen der Bestimmung des oder jedes Materialparameters Einflüsse der Messumgebung kompensiert werden, die zu einer inkorrekten Bestimmung des oder jedes Materialparameters führen würden, insbesondere eine Änderung des Abstands a und/oder b und/oder RD und/oder der optischen Weglänge OWL, die auf einer ungewollten, beispielsweise temperaturbedingten Positionsänderung des Radarsenders und/oder der Referenzfläche beruhen.

Was den Messgegenstand betrifft, so kann der Messgegenstand, vorzugsweise ein Materialstrang, insbesondere aus Schaumstoff, Dämmstoff oder Holzwerkstoff, zur Bestimmung des jeweiligen Materialparameters an unterschiedlichen Positionen des Messgegenstands, an einer das Verfahren ausführenden, insbesondere die Radareinrichtung und/oder die Auswerteeinrichtung und gegebenenfalls die zusätzliche Abstandsmessvorrichtung aufweisenden Messvorrichtung entlanggefördert werden, insbesondere innerhalb des übergeordneten Produktionsprozesses, wobei die Messvorrichtung die Bestimmung des Materialparameters an den unterschiedlichen Positionen des Messgegenstand vornimmt, indem sie die hierfür erforderlichen Messungen jeweils nacheinander an diesen unterschiedlichen Positionen vornimmt.

Die erfindungsgemäße Messvorrichtung kann insbesondere zur Durchführung des Verfahrens des oben genannten Verfahrens eingerichtet sein. Sie weist eine Radareinrichtung zur Messung der optischen Weglänge OWL zwischen einer Referenzfläche und einem Radarsender der Radareinrichtung auf, mit der Radarwellen auf den zwischen dem Sender und der Referenzfläche angeordneten Messgegenstand richtbar sind, die den Messgegenstand durchtreten und danach auf die Referenzfläche treffen, wobei mit der Radareinrichtung zur Messung der optischen Weglänge OWL und/oder mit einer zusätzlichen Abstandsmesseinrichtung der Abstand a messbar ist zwischen dem Radarsender der Radareinrichtung und einer dem Radarsender zugewandten Grenzfläche des Messgegenstands, auf die die Radarwellen bei Eintritt in den Messgegenstand treffen, und/oder der Abstand b zwischen einer der Referenzfläche zugewandten Grenzfläche des Messgegenstands, aus der die Radarwellen nach Durchtritt durch den Messgegenstand austreten, und der Referenzfläche, und/oder der Abstand RD zwischen dem Radarsender der Radareinrichtung und der Referenzfläche, und wobei die Messvorrichtung eine Auswerteeinrichtung aufweist, mit der der zu bestimmende Materialparameter des Messgegenstands auf Basis der Abstände a und b und RD und der gemessenen optischen Weglänge OWL ermittelbar ist.

Dabei kann die Radareinrichtung zur Messung der optischen Weglänge OWL und/oder die Abstandsmesseinrichtung eine FMCW- oder einer AMCW-Radareinrichtung sein. Alternativ oder zusätzlich kann die Abstandsmesseinrichtung eine Laser-Sensoreinrichtung mit mindestens einem Lasersender und mindestens einem Laserempfänger sein oder eine Ultraschall-Sensoreinrichtung mit mindestens einem Ultraschallsender und mindestens einem Ultraschallempfänger.

Die Radareinrichtung zur Messung der optischen Weglänge OWL kann einen Radarempfänger aufweisen, insbesondere einen Radarempfänger, der auf derselben Seite des Messgegenstands angeordnet ist wie der Radarsender der Radareinrichtung.

Die Abstandsmesseinrichtung kann zwei Sensoreinheiten mit jeweils einem Sender und einem Empfänger aufweisen, insbesondere einem Laser- oder Ultraschallsender und einem Laser- oder Ultraschallempfänger, wobei die eine Sensoreinheit zur Messung des Abstands a auf der Seite des Messgegenstands angeordnet ist, auf der der Radarsender der Radareinrichtung zur Messung der optischen Weglänge OWL angeordnet ist, sodass die eine Sensoreinheit auf die dem Radarsender der Radareinrichtung zur Messung der optischen Wegelänge OWL zugewandte Grenzfläche des Messgegenstands Messwellen richten kann, insbesondere Laserlicht oder Ultraschallwellen, und von dieser reflektierte Messwellen empfangen kann, und wobei die andere Sensoreinheit zur Messung des Abstands b auf der anderen Seite des Messgegenstands angeordnet ist, auf der sich die Referenzfläche befindet, sodass die andere Sensoreinheit auf die der Referenzfläche zugewandte Grenzfläche des Messgegenstands Messwellen richten kann und von dieser reflektierte Messwellen empfangen kann.

Was die Abstandsmesseinrichtung betrifft, so kann sie alternativ auch zwei Radar-Sensoreinheiten mit jeweils einem Radarsender und einem Radarempfänger aufweisen, wobei die eine Radar-Sensoreinheit zur Messung des Abstands a auf der Seite des Messgegenstands angeordnet ist, auf der der Radarsender der Radareinrichtung zur Messung der optischen Weglänge OWL angeordnet ist, sodass sie auf die dem Radarsender der Einrichtung zur Messung der optischen Wegelänge OWL zugewandte Grenzfläche des Messgegenstands Radarwellen richten und von dieser reflektierte Radarwellen empfangen kann, und wobei die andere Radar-Sensoreinheit zur Messung des Abstands b auf der anderen Seite des Messgegenstands angeordnet ist, auf der sich die Referenzfläche befindet, sodass sie auf die der Referenzfläche zugewandte Grenzfläche des Messgegenstands Radarwellen richten und von dieser reflektierte Radarwellen empfangen kann.

Weitere Merkmale der vorliegenden Erfindung ergeben sich aus den beigefügten Patentansprüchen, aus der nachfolgenden Beschreibung bevorzugter Ausführungsbeispiele sowie aus den beigefügten Zeichnungen.

Darin zeigt:
- Fig. 1: eine vereinfachte Draufsicht auf eine erste Ausführungsform der erfindungsgemäßen Messvorrichtung,
- Fig. 2: eine Seitenansicht der Messvorrichtung aus Fig. 1,
- Fig. 3: eine Seitenansicht einer zweiten Ausführungsform der erfindungsgemäßen Messvorrichtung,
- Fig. 4: eine Seitenansicht einer dritten Ausführungsform der erfindungsgemäßen Messvorrichtung,
- Fig. 5: eine Seitenansicht einer vierten Ausführungsform der erfindungsgemäßen Messvorrichtung.

Die in den Zeichnungen gezeigte Messvorrichtung 10 dient dazu, ein oder mehrere Materialparameter eines im vorliegenden Fall länglichen Messgegenstands 11 innerhalb des Produktionsprozesses des Messgegenstands 11 zu bestimmen. Bei dem Messgegenstand 11 kann es sich beispielsweise um einen Materialstrang handeln, etwa aus Dämmstoff, aus Schaumstoff oder Holzwerkstoff. Es versteht sich aber, dass mit der vorliegenden Erfindung auch Materialparameter gänzlich anderer Messgegenstände erfasst werden könnten, und zwar auch außerhalb eines Produktionsprozesses.

Im vorliegenden Fall wird der Messgegenstand 11 während der Messung an der Messvorrichtung 10 kontinuierlich oder taktweise vorbeibewegt, sodass die Messvorrichtung 10 an verschiedenen Positionen des Messgegenstands 11 Messungen vornehmen kann. Auf diese Weise kann der jeweilige Materialparameter des Messgegenstands 11 während des gesamten Produktionsprozesses mehrfach, insbesondere kontinuierlich oder periodisch, gemessen und auf diese Weise überwacht werden.

Die jeweilige Messung kann erfolgen, während sich die Messvorrichtung 10 relativ zum Messgegenstand 11 im Stillstand befindet oder alternativ, während diese sich relativ zueinander bewegen.

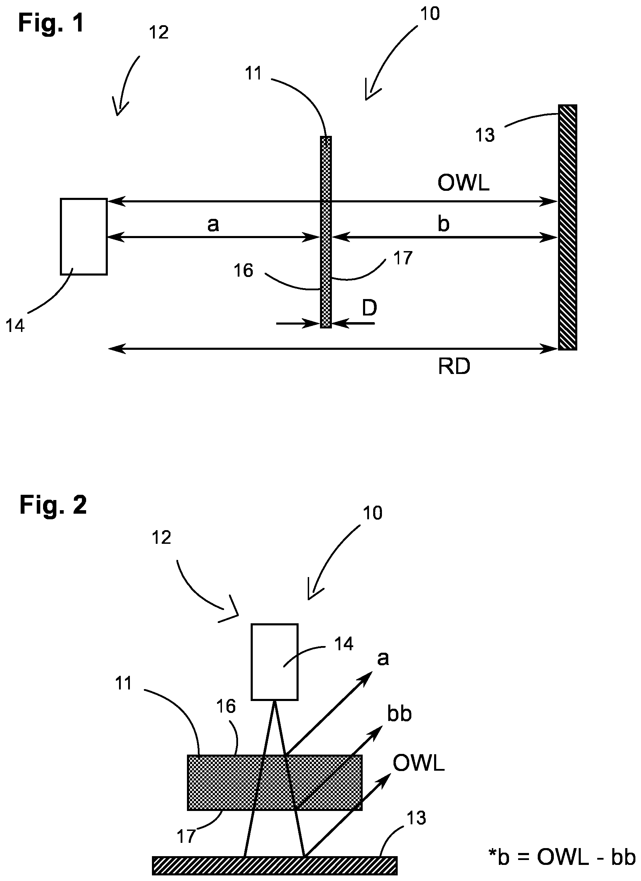

Wie in Fig. 1 erkennbar ist, befindet sich der Messgegenstand 11 zwischen einer Radareinrichtung 12 der Messvorrichtung 10 und einer Referenzfläche 13 der Messvorrichtung 10.

Die Radareinrichtung 12 umfasst im Fall der Fig. 1 eine Radar-Sensoreinheit 14 mit einem Radarsender und einem Radarempfänger, die beide auf der Seite des Messgegenstands 11 angeordnet sind, die von der Referenzfläche 13 abgewandt ist. Bei der Radar-Sensoreinheit 14 kann es sich um eine FMCW- oder eine AMCW-Sensoreinheit handeln, die entsprechend auf diesen bekannten Techniken beruht.

Mit dem erfindungsgemäßen Verfahren soll im vorliegenden Fall eine geometrische Abmessung des Messgegenstands 11 bestimmt werden, nämlich dessen Dicke D, sowie zusätzlich der Brechungsindex ME des Messgegenstands 11. Es könnten auch andere geometrische Abmessungen eines Messgegenstands bestimmt werden oder andere Materialparameter. Beispielsweise könnte nach Bestimmung der Dicke D und des Brechungsindex ME die Dichte des Messgegenstands 11 bzw. des Materials, aus dem er besteht, bestimmt werden, etwa durch Verwendung von Tabellen, in denen die Dicke D und/oder der Brechungsindex mit diesen weiteren Materialparametern verknüpft ist, und/oder durch Verwendung geeigneter Formeln.

Im Rahmen der Ausführungsform der Fig. 1 und 2 sendet die Radareinrichtung 12 bzw. der Radarsender der Radareinrichtung 12 Radarwellen auf bzw. in Richtung des Messgegenstands 11, die diesen mindestens teilweise durchdringen, dann von der vorzugsweise metallischen Referenzfläche 13 in Richtung des Messgegenstands 11 zurückreflektiert werden, diesen mindestens teilweise erneut in entgegengesetzter Richtung durchdringen und schließlich von dem Radarempfänger der Radar-Sensoreinheit 14 detektiert werden.

Die Radareinrichtung 12 erlaubt es dabei, im übergeordneten Produktionsprozess für das erfindungsgemäße Verfahren wichtige Abstände/Abmessungen bzw. Werte kontinuierlich oder periodisch zu bestimmen, vorzugsweise mittels an sich bekannter Verfahren wie dem FMCW- oder dem AMCW-Radarmessverfahren. Die Frequenzen der eingesetzten (naturgemäß elektromagnetischen) Radarwellen bewegen sich dabei vorzugsweise im Bereich zwischen 03, GHz und 1000 GHz.

Bei den auf diese Weise bestimmten Messwerten handelt es sich zum einen um die optische Weglänge OWL zwischen dem Radarsender und der Referenzfläche 13, des Weiteren um den Abstand a zwischen dem Radarsender und dem Messgegenstand 11 und um den Abstand b zwischen dem Messgegenstand 11 und der Referenzfläche 13, vgl. Fig. 1.

Der Abstand a wird dabei kontinuierlich oder periodisch mittels von der dem Radarsender der Radareinrichtung 12 zugewandten Grenzfläche 16 des Messgegenstands 11 reflektierten Radarwellen gemessen, die zuvor auf den Messgegenstand 11 gerichtet wurden.

Der Abstand b wird kontinuierlich oder periodisch mittels von der der Referenzfläche 13 zugewandten Grenzfläche 17 des Messgegenstands 11 reflektierten Radarwellen gemessen, die zuvor auf den Messgegenstand 11 gerichtet wurden, wobei sich der Abstand b aus der Differenz des Abstands OWL und b ergibt, vgl. Fig. 2.

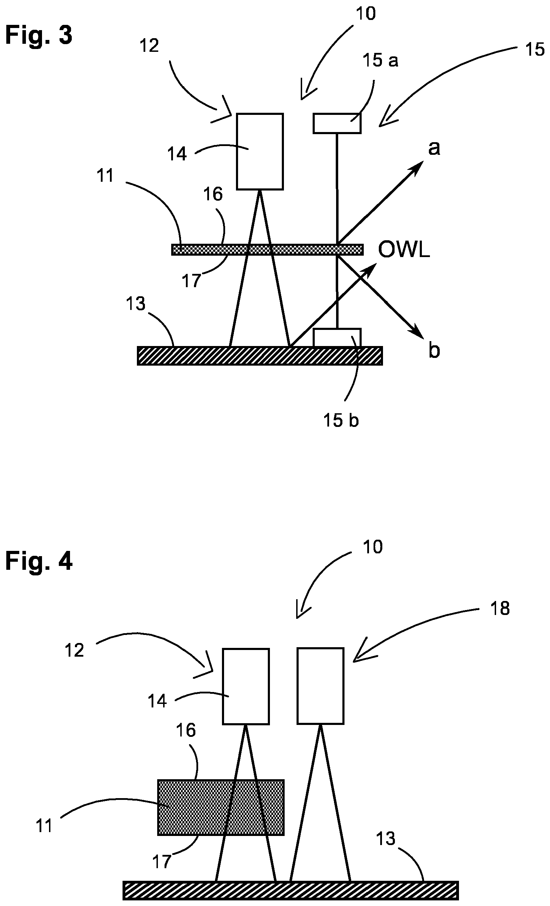

Wie in der Fig. 3 gezeigt ist, könnten die Abstände a und b alternativ auch mittels einer separaten bzw. zusätzlichen Abstandsmesseinrichtung 15 gemessen werden. Die Abstandsmesseinrichtung 15 kann beispielsweise zwei Sensoreinheiten 15 a und 15 b mit jeweils einem Sender und einem Empfänger aufweisen, insbesondere mit einem Radar-, Laser- oder Ultraschallsender und einem Radar-, Laser- oder Ultraschallempfänger.

Die eine Sensoreinheit 15 a kann dann zur Messung des Abstands a auf der Seite des Messgegenstands 11 angeordnet sein, auf der der Radarsender der Radareinrichtung 12 zur Messung der optischen Weglänge OWL angeordnet ist, sodass die Sensoreinheit 15 a auf die dem Radarsender der Radareinrichtung 12 zur Messung der optischen Wegelänge OWL zugewandte Grenzfläche 16 des Messgegenstands 11 Messwellen richten kann, insbesondere Radarwellen, Laserlicht oder Ultraschallwellen, und von dieser reflektierte Messwellen empfangen kann.

Die andere Sensoreinheit 15 b kann zur Messung des Abstands b dann auf der anderen Seite des Messgegenstands 11 angeordnet sein, auf der sich die Referenzfläche 13 befindet, sodass die andere Sensoreinheit 15 b auf die der Referenzfläche 13 zugewandte Grenzfläche 17 des Messgegenstands 11 Messwellen richten kann und von dieser reflektierte Messwellen empfangen kann.

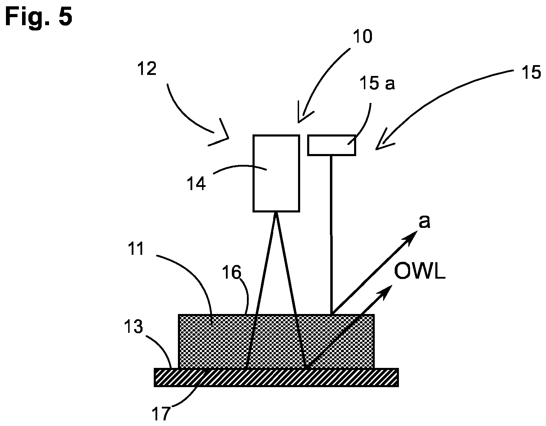

Wie in der Fig. 5 gezeigt ist, ist alternativ auch denkbar, dass der Abstand b nicht explizit gemessen werden muss, beispielsweise wenn der Abstand b offensichtlich null beträgt, weil der Messgegenstand 11 unmittelbar an der Referenzfläche 13 anliegt. Entsprechend kann in der Ausführungsform der Fig. 5 im Gegensatz zur Ausführungsform der Fig. 3 auf die zweite Sensoreinheit 15 b der Abstandsmesseinrichtung 15 verzichtet werden.

Was den (tatsächlichen) Abstand RD zwischen dem Radarsender und der Referenzfläche 13 betrifft, so wird er bei den Ausführungsformen der Fig. 1, 2, 3 und 5 als bekannt vorausgesetzt und kann beispielsweise bereits vor dem Produktionsprozess im Rahmen der Installation der Messvorrichtung 10 manuell oder automatisch mittels einer geeigneten Messeinrichtung ermittelt worden sein.

Denkbar ist aber auch, den realen Abstand RD innerhalb des Produktionsprozesses mittels einer zusätzlichen Abstandsmesseinrichtung 18 zu ermitteln bzw. zu messen, vgl. Fig. 4, die beispielsweise ebenfalls auf Radartechnik beruht oder alternativ auf Lasertechnik oder Ultraschalltechnik. Diese muss dabei naturgemäß so angeordnet sein, dass ihre Messwellen an dem Messgegenstand 11 vorbeigerichtet werden und direkt auf die Referenzfläche 13 treffen, ohne dass sie zuvor durch den Messgegenstand 11 hindurchtreten müssen.

Bei dieser weiteren Abstandsmesseinrichtung 18 kann es sich ebenfalls um eine Radareinrichtung handeln. Alternativ kann auch sie aber beispielsweise auf Lasermesstechnik beruhen oder auf Ultraschallmesstechnik beruhen.

Auf Basis der vorgenannten Werte a, b, OWL und RD können dann erfindungsgemäß von einer Auswerteeinrichtung der Messvorrichtung 10, etwa einer Computereinrichtung der Messvorrichtung 10, der diese Werte übermittelt werden, mithilfe der in den beiden nachfolgenden Gleichungen I und II abgebildeten Gesetzmäßigkeiten die Dicke D und/oder der Brechungsindex ME des Messgegenstands 11 bestimmt werden:
I) $OWL = a + b + D * ME$
II) $RD = a + b + D$

Denkbar ist aber auch, beispielsweise die Dicke D nicht mittels bzw. auf Basis der durch die Radareinrichtung 12 gemessenen Abstände zu ermitteln, sondern diese separat zu messen, etwa mittels mechanischer Taster. Dann würde im Rahmen des erfindungsgemäßen Verfahrens mittels der so erfassten Dicke D und den Werten a und b sowie der optischen Weglänge OWL im ersten Schritt (nur) der Brechungsindex ME ermittelt werden.

Mittels der Dicke D und/oder des Brechungsindex ME und weiterer, mit der Dicke und/oder dem Brechungsindex ME zusammenhängender Daten, insbesondere in einer oder mehreren Tabellen hinterlegter Daten, die zuvor empirisch ermittelt wurden, könnte dann auch die Dichte des Messgegenstands 11 bzw. des Materials des Messgegenstands 11 bestimmt werden.

Gemäß einer wichtigen Besonderheit der Erfindung kann zudem vorgesehen sein, dass im Rahmen des erfindungsgemäßen Verfahrens automatisch eine Inline-Kalibrierung erfolgt, um beispielsweise Störungen zu kompensieren bzw. zu korrigieren, die durch Umgebungseinflüsse entstehen und die ansonsten die Ergebnisse verfälschen würden, die im Rahmen der Bestimmung der Materialparameter ermittelt werden. Konkret also Umgebungseinflüsse, die zu einer inkorrekten Bestimmung der Dicke D und/oder des Brechungsindex ME etc. führen würde.

Beispielsweise könnten Temperaturschwankungen am Ort der Messvorrichtung 10 dazu führen, dass sich der Abstand RD ungewollt ändert. Um dies zu kompensieren, kann vorgesehen werden, mittels der Abstandsmesseinrichtung 18 der Fig. 3 den Abstand RD im Produktionsprozess mehrfach, insbesondere periodisch oder kontinuierlich, zu messen und dann entsprechend im Rahmen der Bestimmung der Dicke D und/oder des Brechungsindex ME und/oder der Dichte etc. jeweils den aktuellen Ist-Wert von RD zu verwenden.

In ähnlicher Weise können auch die Abstände a und/oder b und/oder die Dicke und/oder OWL mehrfach, insbesondere periodisch oder kontinuierlich, gemessen werden, um Störungen zu kompensieren.

### Bezugszeichenliste:

- 10: Messvorrichtung
- 11: Messgegenstand
- 12: Radareinrichtung
- 13: Referenzfläche
- 14: Radar-Sensoreinheit
- 15: Abstandsmesseinrichtung
- 15 a: Sensoreinheit
- 15 b: Sensoreinheit
- 16: Grenzfläche
- 17: Grenzfläche
- 18: Abstandsmesseinrichtung

## Patentansprüche

1. Verfahren zur insbesondere automatischen Bestimmung mindestens eines Materialparameters, bevorzugt mindestens zwei Materialparametern, insbesondere der Dicke und/oder der Dichte und/oder des Brechungsindex oder eines anderen Materialparameters, eines bevorzugt länglichen Messgegenstands (11), bei dem, vorzugsweise innerhalb eines übergeordneten Produktionsprozesses, in dem der Messgegenstand (11) hergestellt oder verwendet wird, mittels eines Radarsenders Radarwellen auf den zwischen einer Referenzfläche (13) und dem Radarsender angeordneten Messgegenstand (11) gerichtet werden, die den Messgegenstand (11) durchtreten und danach auf die Referenzfläche (13) treffen, bei dem mittels der Radarwellen die optische Weglänge OWL zwischen Radarsender und Referenzfläche (13) gemessen wird, und bei dem, insbesondere mittels einer Auswerteeinrichtung, der zu bestimmende Materialparameter des Messgegenstands (11) auf Basis der gemessenen optischen Wegelänge OWL ermittelt wird, des Abstands a zwischen dem Radarsender und einer dem Radarsender zugewandten Grenzfläche des Messgegenstands (11), auf die die Radarwellen bei Eintritt in den Messgegenstand (11) treffen, des Abstands b zwischen einer der Referenzfläche (13) zugewandten Grenzfläche des Messgegenstands (11), aus der die Radarwellen nach Durchtritt durch den Messgegenstand (11) austreten, und der Referenzfläche (13), und des Abstands RD zwischen dem Radarsender und der Referenzfläche (13).

2. Verfahren gemäß Anspruch 1, **dadurch gekennzeichnet, dass** der Abstand a und/oder der Abstand b und/oder der Abstand RD bestimmt oder gemessen wird, insbesondere vor der Ermittlung des Materialparameters durch die Auswerteeinrichtung, und/oder
dass der Abstand a mittels von der dem Radarsender zugewandten Grenzfläche (16) des Messgegenstands (11) reflektierten elektromagnetischen Wellen, insbesondere Radarwellen oder Laserlicht, oder mittels Ultraschallwellen gemessen wird, die zuvor auf den Messgegenstand (11) gerichtet wurden, und/oder dass der Abstand b mittels von der der Referenzfläche (13) zugewandten Grenzfläche (17) des Messgegenstands (11) reflektierten elektromagnetischen Wellen, insbesondere Radarwellen oder Laserwellen, oder mittels Ultraschallwellen gemessen wird, die zuvor auf den Messgegenstand (11) gerichtet wurden, und/oder dass der Abstand RD mittels elektromagnetischer Wellen, insbesondere Radarwellen oder Laserwellen, oder mittels Ultraschallwellen gemessen wird, die zuvor auf die Referenzfläche (13) gerichtet wurden, insbesondere mittels solcher Wellen, die von der Referenzfläche (13) reflektiert wurden.

3. Verfahren gemäß Anspruch 2, **dadurch gekennzeichnet, dass** die optische Weglänge OWL und/oder der Abstand a und/oder der Abstand b mittels der von dem Radarsender stammenden Radarwellen gemessen wird, oder dass die optische Weglänge OWL mittels der von dem Radarsender stammenden Radarwellen gemessen wird und der Abstand a und/oder der Abstand b und/oder der Abstand RD mittels Laserlicht eines oder mehrerer Lasersender oder mittels Radarwellen eines oder mehrerer weiterer Radarsender oder mittels Ultraschallwellen eines oder mehrerer Ultraschallsender.

4. Verfahren gemäß Anspruch 3, **dadurch gekennzeichnet, dass** die Radarwellen zur Messung der optischen Weglänge OWL Radarwellen niedrigerer Frequenz sind, insbesondere im Bereich zwischen 1 GHz und 80 GHz, bevorzugt zwischen 1 und 67 GHz, und die Radarwellen zur Messung des Abstands a und/oder b und/oder RD Radarwellen höherer Frequenz, insbesondere im Bereich zwischen 40 GHz und 300 GHz, bevorzugt zwischen 50 GHz und 260 GHz.

5. Verfahren gemäß einem oder mehreren der vorhergehenden Ansprüche, **dadurch gekennzeichnet, dass** die Radarwellen zur Messung des Abstands a und/oder b und/oder RD und/oder der optischen Weglänge OWL Radarwellen im Bereich zwischen 0,3 GHz und 1000 GHz sind, und/oder
dass der Abstand a und/oder b und/oder RD und/oder die optische Weglänge OWL mittels eines FMCW- oder mittels eines AMCW-Radarmessverfahrens gemessen wird.

6. Verfahren gemäß Anspruch 5, **dadurch gekennzeichnet, dass** im Rahmen der Messung des Abstands a und/oder b und/oder RD und/oder der optischen Weglänge OWL von dem Radarsender oder dem einen weiteren oder jedem weiteren Radarsender frequenz- oder amplitudenmodulierte Radarwellensignale erzeugt und nach Reflexikon durch die (jeweilige) Grenzfläche (16, 17) des Messgegenstands (11) oder die Referenzfläche (13) von einem Radarempfänger empfangen werden, und dass die Abstände a und/oder b und/oder RD und/oder die optische Weglänge OWL auf Basis der Frequenz- bzw. Amplitudenverschiebung zwischen den erzeugten und den empfangenen Signalen ermittelt werden.

7. Verfahren gemäß einem oder mehreren der vorhergehenden Ansprüche, **dadurch gekennzeichnet, dass** zur Kompensation von Einflüssen der Messumgebung, die zu einer inkorrekten Bestimmung des oder jedes Materialparameters führen würden, insbesondere einer ungewollten, beispielsweise temperaturbedingten Positionsänderung des Radarsenders und/oder der Referenzfläche (13), der aktuelle Abstand RD während des Verfahrens, insbesondere im übergeordneten Produktionsprozess, mehrfach, insbesondere periodisch oder kontinuierlich, gemessen wird, und dass dieser jeweils gemessene Abstand RD im Rahmen der Ermittlung des oder jedes zu bestimmenden Materialparameters verwendet wird, und/oder
dass der aktuelle Abstand a und/oder b und/oder RD und/oder die optischen Weglänge OWL mehrfach, insbesondere periodisch, gemessen wird, und dass mit den gemessenen Werten im Rahmen der Bestimmung des oder jedes Materialparameters Einflüsse der Messumgebung kompensiert werden, die zu einer inkorrekten Bestimmung des oder jedes Materialparameters führen würden, insbesondere eine Änderung des Abstands a und/oder b und/oder RD und/oder der optischen Weglänge OWL, die auf einer ungewollten, beispielsweise temperaturbedingten Positionsänderung des Radarsenders und/oder der Referenzfläche (13) beruhen.

8. Verfahren gemäß einem oder mehreren der vorhergehenden Ansprüche, mindestens gemäß Anspruch 7, **dadurch gekennzeichnet, dass** der insbesondere gemeinsam mit dem Radarsender eine Radarsensoreinheit bildende Radarempfänger auf derselben Seite des Messgegenstands (11) angeordnet ist wie der Radarsender oder der weitere Radarsender.

9. Verfahren gemäß einem oder mehreren der vorhergehenden Ansprüche, mindestens gemäß Anspruch 3, **dadurch gekennzeichnet, dass** der Lasersender oder der Ultraschallsender oder der weitere Radarsender, der das Laserlicht bzw. die Ultraschallwellen bzw. die Radarwellen zur Messung des Abstands a auf die dem Radarsender zugewandte Grenzfläche (16) richtet, benachbart zu dem Radarsender auf derselben Seite des Messgegenstands (11) angeordnet ist wie der Radarsender, und/oder dass der Lasersender oder der Ultraschallsender oder der weitere Radarsender, der das Laserlicht bzw. die Ultraschallwellen bzw. die Radarwellen zur Messung des Abstands b auf der Referenzfläche (13) zugewandte Grenzfläche (17) richtet, benachbart zu der Referenzfläche (13) auf derselben Seite des Messgegenstands (11) angeordnet ist wie die Referenzfläche (13).

10. Verfahren gemäß einem oder mehreren der vorhergehenden Ansprüche, **dadurch gekennzeichnet, dass** der oder einer der Materialparameter, der im Rahmen des Verfahrens bestimmt wird, eine (geometrische) Abmessung D des Messgegenstands (11) ist, insbesondere dessen Dicke, und/oder die Dichte des Messgegenstands (11) und/oder der Brechungsindex ME des Messgegenstands (11), wobei im Rahmen der Bestimmung der Abmessung D und/oder der Dichte und/oder des Brechungsindex ME der Zusammenhang OWL = a + b + D * ME und/oder der Zusammenhang RD = a + b + D verwendet wird.

11. Verfahren gemäß einem oder mehreren der vorhergehenden Ansprüche, **dadurch gekennzeichnet, dass** der Messgegenstand (11), vorzugsweise ein Materialstrang, insbesondere aus Schaumstoff, Dämmstoff oder Holzwerkstoff, zur Bestimmung des Materialparameters an unterschiedlichen Positionen des Messgegenstands (11) an einer das Verfahren ausführenden, insbesondere die Radareinrichtung (12) und/oder die Auswerteeinrichtung und gegebenenfalls die zusätzliche Abstandsmessvorrichtung aufweisenden Messvorrichtung (10) relativ zu der Messvorrichtung (10) an dieser vorbeibewegt wird, vorzugsweise kontinuierlich oder taktweise, insbesondere innerhalb des übergeordneten Produktionsprozesses, und dass die Messvorrichtung (10) die Bestimmung des Materialparameters an unterschiedlichen Positionen des Messgegenstands (11) vornimmt, indem sie die hierfür erforderlichen Messungen jeweils nacheinander an diesen unterschiedlichen Positionen vornimmt.

12. Messvorrichtung zur Bestimmung mindestens eines Materialparameters, bevorzugt mindestens zwei Materialparametern, insbesondere der Dicke und/oder der Dichte und/oder des Brechungsindex und/oder eines anderen Materialparameters, eines bevorzugt länglichen Messgegenstands (11), insbesondere zur Durchführung des Verfahrens gemäß einem oder mehreren der vorhergehenden Ansprüche, mit einer Radareinrichtung (12) zur Messung der optischen Weglänge OWL zwischen einer Referenzfläche (13) und einem Radarsender der Radareinrichtung (12), mit der Radarwellen auf den zwischen dem Sender und der Referenzfläche (13) angeordneten Messgegenstand (11) richtbar sind, die den Messgegenstand (11) durchtreten und danach auf die Referenzfläche (13) treffen, wobei mit der Radareinrichtung (12) zur Messung der optischen Weglänge OWL und/oder mit einer zusätzlichen Abstandsmesseinrichtung der Abstand a messbar ist zwischen dem Radarsender der Radareinrichtung (12) und einer dem Radarsender zugewandten Grenzfläche (16) des Messgegenstands (11), auf die die Radarwellen bei Eintritt in den Messgegenstand (11) treffen, und/oder der Abstand b zwischen einer der Referenzfläche (13) zugewandten Grenzfläche (17) des Messgegenstands (11), aus der die Radarwellen nach Durchtritt durch den Messgegenstand (11) austreten, und der Referenzfläche (13), und/oder der Abstand RD zwischen dem Radarsender der Radareinrichtung (12) und der Referenzfläche (13), und wobei die Messvorrichtung (10) eine Auswerteeinrichtung aufweist, mit der der zu bestimmende Materialparameter des Messgegenstands (11) auf Basis der Abstände a und b und RD und der gemessenen optischen Weglänge OWL ermittelbar ist.

13. Messvorrichtung gemäß Anspruch 12, **dadurch gekennzeichnet, dass** die Radareinrichtung (12) zur Messung der optischen Weglänge OWL und/oder die Abstandsmesseinrichtung eine FMCW- oder eine AMCW-Radareinrichtung ist, und/oder dass die Abstandmesseinrichtung eine Laser-Sensoreinrichtung mit mindestens einem Lasersender und mindestens einem Laserempfänger ist oder eine Ultraschall-Sensoreinrichtung mit mindestens einem Ultraschallsender und mindestens einem Ultraschallempfänger.

14. Messvorrichtung gemäß einem oder mehreren der Ansprüche 12 - 13, **dadurch gekennzeichnet, dass** die Radareinrichtung (12) zur Messung der optischen Weglänge OWL einen Radarempfänger aufweist, insbesondere einen Radarempfänger, der auf derselben Seite des Messgegenstands (11) angeordnet ist wie der Radarsender der Radareinrichtung (12).

15. Messvorrichtung gemäß einem oder mehreren der Ansprüche 12 - 14, **dadurch gekennzeichnet, dass** die Abstandsmesseinrichtung zwei Sensoreinheiten (15 a, 15 b) mit jeweils einem Sender und einem Empfänger aufweist, insbesondere einem Radar-, Laser- oder Ultraschallsender und einem Radar-, Laser- oder Ultraschallempfänger, wobei die eine Sensoreinheit (15 a) zur Messung des Abstands a auf der Seite des Messgegenstands (11) angeordnet ist, auf der der Radarsender der Radareinrichtung (12) zur Messung der optischen Weglänge OWL angeordnet ist, sodass die eine Sensoreinheit (15 a) auf die dem Radarsender der Radareinrichtung (12) zur Messung der optischen Wegelänge OWL zugewandte Grenzfläche (16) des Messgegenstands (11) Messwellen richten kann, insbesondere Radarwellen, Laserlicht oder Ultraschallwellen, und von dieser reflektierte Messwellen empfangen kann, und wobei die andere Sensoreinheit (15 b) zur Messung des Abstands b auf der anderen Seite des Messgegenstands (11) angeordnet ist, auf der sich die Referenzfläche (13) befindet, sodass die andere Sensoreinheit (15 b) auf die der Referenzfläche (13) zugewandte Grenzfläche (17) des Messgegenstands (11) Messwellen richten kann und von dieser reflektierte Messwellen empfangen kann.
